Europäisches Patentamt

European Patent Office

Office européen des brevets

(11) Veröffentlichungsnummer: **0 456 168 A2**

# EUROPÄISCHE PATENTANMELDUNG

(21) Anmeldenummer: 91107337.7

(22) Anmeldetag: 06.05.91

(51) Int. Cl.⁵: **G01L 1/22**, G01G 3/147,
G01D 5/16

(30) Priorität: 10.05.90 DE 4015042

(43) Veröffentlichungstag der Anmeldung:
**13.11.91 Patentblatt 91/46**

(84) Benannte Vertragsstaaten:
**AT CH DE ES FR GB IT LI SE**

(71) Anmelder: **SIEMENS AKTIENGESELLSCHAFT**
**Wittelsbacherplatz 2**
**W-8000 München 2(DE)**

(72) Erfinder: **Schalk, Karl, Dipl.-Ing.**
**Paumannstrasse 124**
**W-8500 Nürnberg 50(DE)**
Erfinder: **Thürauf, Dieter, Dipl.-Ing. (FH)**
**Ausbacher Strasse 24**
**W-8501 Neuhof(DE)**
Erfinder: **Amtmann, Karlheinz**
**Hochholzer Hauptstrasse 25**
**W-8535 Emskirchen(DE)**

(54) **Vorrichtung zur Analog-Ditial-Wandlung einer Messgrösse, die von in Brückenschaltung angeordneten Sensoren erzeugt wird, insbesondere von Dehnungsmessstreifen in einer Wägezelle.**

㊗ Die Abweichung ($\Delta U, \Delta I$) zwischen Meßgröße ($U_m, I_m$) und einer dieser nachgeführten Kompensationsgröße ($U_k, I_k$) wird einem Komparator (K) zugeführt, der bei Vorhandensein dieser Abweichung ein binäres Steuersignal (KA) bildet. Ein Mikroprozessor (CU) verändert, insbesondere erhöht bzw. erniedrigt einen kodierten Steuerwert (SW) abhängig vom Vorhandensein bzw. Fehlen des binären Steuersignales (KA). Ein Digital-Analog-Wandler (DAU) führt schließlich entsprechend dem kodierten Steuerwert (SW) die Kompensationsgröße ($U_k, I_k$) nach. Vorteilhaft ist zwischen dem Vergleichspunkt (V) von Meß- und Kompensationsgröße und dem Komparatoreingang (KE) ein Regler (R) angeordnet. Mit Hilfe einer weiteren Schaltmittelbaugruppe kann der Nullpunkt-Offset- und Verstärkungsfehler der Vorrichtung bestimmt werden. Vorteilhaft steuert der Mikroprozessor die Schaltmittelbaugruppe während Kalibrierungsroutinen an, und korrigiert zum Zwecke der Meßwertausgabe den kodierten Steuerwert (MSW).

FIG 1

Die Erfindung betrifft eine Vorrichtung zur Analog-Digital-Wandlung einer elektrischen Meßgröße, welche von Sensoren mit veränderlichem Widerstand erzeugt wird, die in Brückenschaltung angeordnet sind.

Bei den in Brückenschaltung angeordneten Sensoren handelt es sich um Elemente, deren elektrischer Innenwiderstand abhängig vom Einfluß einer von außen einwirkenden physikalischen Größe steuerbar ist. So kann es sich bei den Sensoren z.B. um sogenannte Dehnungsmeßstreifen ("DMS") handeln, welche auf entsprechenden Oberflächen eines als Wägezelle dienenden Verformungskörpers angebracht sind. Die Widerstandsänderung wird in diesem Fall durch direkte Einwirkung insbesondere von Zugkräften auf die Dehnungsmeßstreifen bewirkt. Es sind aber auch andere physikalische Größen denkbar, die eine Widerstandsänderung hervorrufen. So können bei andersartigen Meßaufgaben z.B. temperaturabhängige, magnetfeldabhängige, d.h. z.B. piezoelektrische, bzw. lichtempfindliche Sensoren mit hierdurch steuerbarem Innenwiderstand in Brückenschaltung angeordnet sein.

Aus der Veröffentlichung von Manfred Kreuzer mit dem Titel "Moderne mikrocomputergesteuerte digitale Kompensatoren, Teil 1: Schaltungen für Digital-Kompensatoren" in "Meßtechnische Briefe 21 (1985), Heft 2, Seite 35 ff." ist in Bild 3 auf Seite 37 eine Vorrichtung zur Analog-Digital-Wandlung einer Meßspannung bekannt. Diese wird von in Brückenschaltung angeordneten Dehnungsmeßstreifen erzeugt, welche in einem Kraftaufnehmer bzw. einer Wägezelle angebracht sind. Die Schaltung arbeitet im wesentlichen nach dem sogenannten Kompensationsprinzip. Dabei wird der Meßgröße eine entsprechende elektrische Kompensationsgröße nachgeführt. Bei Erreichen des Kompensationspunktes, d.h. der Übereinstimmung von Meß- und Kompensationsgröße, kann aus einer zur Bildung der Kompensationsgröße dienenden Vorgröße das digitale Äquivalent der elektrischen Meßgröße abgeleitet werden. Hierzu wird zunächst die Abweichung der Kompensationsgröße von der Meßgröße in einem sogenannten Nullverstärker verstärkt. Dessen analoges Ausgangssignal wird desweiteren von einem Spannungsfrequenzumsetzer in eine Impulskette umgewandelt, deren Frequenz von der Größe des Signals am Ausgang des Nullverstärkers abhängig ist. Die Impulskette wird in einem sich anschließenden Vorwärts-/Rückwärtszähler ausgezählt. Das Zählergebnis wird einem als Stellglied dienenden, schaltbaren Widerstandsnetzwerk zugeführt, welches hieraus die elektrische Kompensationsgröße bildet und dem Vergleichspunkt zuführt. Das Zählergebnis wird zum anderen einer Einheit zur digitalen Anzeige der hierdurch repräsentierten elektrischen Meßgröße zugeführt.

Mit zunehmender Annäherung an den Kompensationspunkt nimmt bei dieser bekannten Schaltung gleichzeitig mit der Abweichung zwischen Kompensations- und Meßgröße auch die Spannung am Ausgang des Nullverstärkers zunehmend ab. Als Folge davon nimmt die Frequenz der dem Vorwärts-/Rückwärtszähler zugeführten Impulskette am Ausgang des Spannungsfrequenzumsetzers zunehmend ab und konvergiert gegen Null. Die bekannte Schaltung hat somit den Nachteil, daß die Nachführung der Kompensationsgröße mit zunehmender Annäherung an den Kompensationspunkt immer langsamer wird und in den Kompensationszustand "hineinkriecht". Dies hat eine unerwünschte Verzögerung gerade kurz vor Erreichen des angestrebten Kompensationspunktes zur Folge. Die bekannte Schaltung hat desweiteren den Nachteil, das ihre Genauigkeit erheblich durch die Exemplarstreuungen der verwendeten Bauteile, insbesondere des Vorverstärkers und des Nullverstärkers, und der Temperatur- und Langzeitdriftungen von deren Ein- und Ausgangssignalen beeinträchtigt wird. Die Genauigkeit der bekannten Schaltung kann im Prinzip nur durch hohe Anforderungen an die Qualität der verwendeten Bauteile, insbesondere der Präzision der im schaltbaren Widerstandsnetzwerk verwendeten Widerstände, verbessert werden.

Zur Überwindung dieser und anderer Nachteile wird in Bild 5, Seite 38 des oben angegebenen Aufsatzes von Kreuzer eine weitere Schaltung angegeben, bei der dem Spannungsfrequenzumsetzer u.a. ein Mikrocomputer nachgeschaltet ist, welcher zur Bildung der Kompensationsgröße zwei Schaltelemente mit pulsbreitenmodulierten Steuersignalen versorgt. Diese Schaltung ist aber wiederum mit einer Vielzahl von Nachteilen behaftet, von denen nur die Wesentlichsten kurz aufgeführt werden sollen. So ist die Schaltung insbesondere durch den zusätzlichen Einsatz zweier Zähler, des Mikrocomputers und zweier Timer besonders aufwendig. Sie eignet sich somit nicht z.B. zur Verwendung als sogenannte "Wägeelektronik", welche in großen Stückzahlen im Zusammenhang mit den als ein Standardprodukt anzusehenden Wägezellen benötigt wird. Diese bekannte Schaltung ist somit allenfalls in aufwendigen, stationären Laboreinzelgeräten, z.B. zur Kalibrierung von Wägezellen in einem Prüffeld, geeignet. Ein besonderer Nachteil dieser Schaltung besteht desweiteren darin, daß die Schaltfrequenz der zur Bildung der Kompensationsgröße nach dem Prinzip der Pulsbreitenmodulation dienenden Schalter begrenzt ist. Dies hat seine Ursache darin, daß trotz eines sorgfältigen Aufbaues die Kapazitäten der Anschlußleitungen der Schalter bei jedem Schaltvorgang umgeladen werden müssen.

Der Erfindung liegt die Aufgabe zugrunde, eine Vorrichtung der oben genannten Art zur Analog-Digital-Wandlung einer elektrischen Meßgröße anzugeben, die sich trotz eines möglichst einfachen Aufbaues durch höchste Genauigkeit und einer möglichst kurzen Wandlungs- bzw. Einstellzeit auszeichnet.

Die Aufgabe wird gelöst mit Hilfe einer Vorrichtung, welche über die in Anspruch 1 enthaltenen Merkmale verfügt. Vorteilhafte Ausführungsformen der Erfindung sind in den Unteransprüchen angegeben.

Die Erfindung wird desweiteren anhand der nachfolgend kurz angeführten Figuren näher erläutert. Dabei zeigt

FIG 1    das Blockschaltbild einer vorteilhaften Ausführungsform der Erfindung, wobei als elektrische Kompensationsgröße eine Spannung dient,

FIG 2    das Blockschaltbild einer weiteren vorteilhaften Ausführungsform der Erfindung, wobei als elektrische Kompensationsgröße ein Strom dient,

FIG 3    eine weitere vorteilhafte Ausführung der Schaltung von FIG 2 mit einem zusätzlichen Regler für die Abweichung von Kompensations- und Meßgröße, und einer zusätzlichen Schaltergruppe am Ausgang der Brückenschaltung, und

FIG 4    beispielhaft eine mögliche praktische Ausführung der Schaltung von FIG 3.

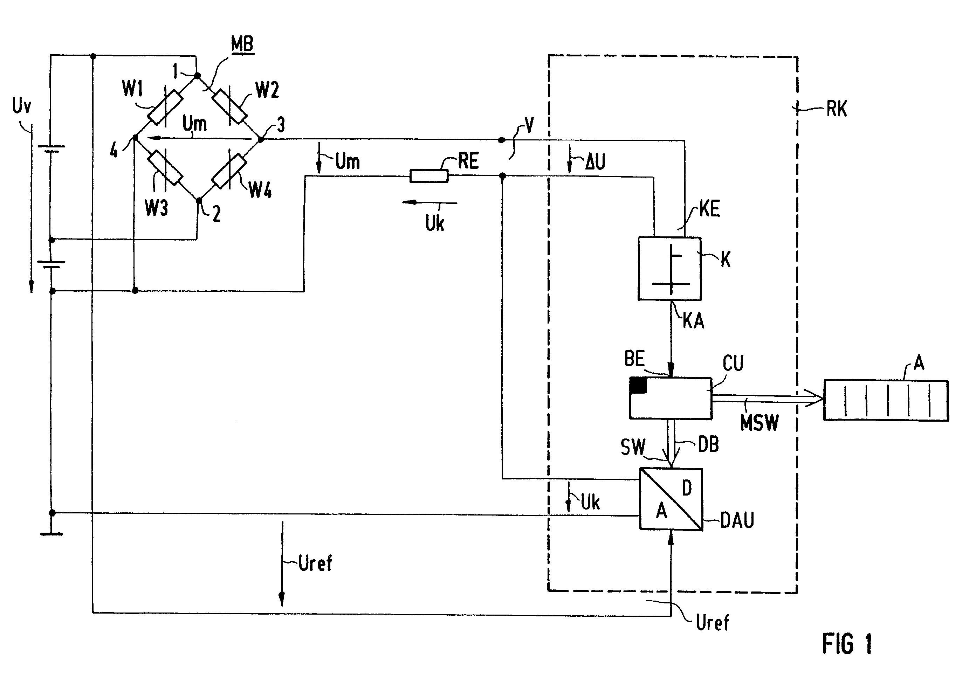

Gemäß dem Blockschaltbild von FIG 1 sind vier Sensoren W1, W2, W3 und W4, welche über einen veränderlichen Innenwiderstand verfügen, in einer Meßbrückenschaltung MB angeordnet. Diese wird in bekannter Weise an den beiden Eckpunkten 1, 2 von einer Versorgungsgleichspannung Uv gespeist, und erzeugt an den diagonalen Eckpunkten 3, 4 eine analoge Meßspannung Um. Diese Meßspannung am Ausgang der Brückenschaltung wird durch die nachfolgenden Schaltungselemente in einen digitalen Wert umgewandelt, welcher bevorzugt zur Anzeige gebracht bzw. an digitale Rechenvorrichtungen zur Weiterverarbeitung übergeben werden kann.

Die erfindungsgemäße Schaltung arbeitet nach dem bekannten Prinzip der Kompensation. Hierzu wird bei der Ausführungsform der FIG 1 der elektrischen Meßgröße Um eine als Kompensationsgröße dienende Spannung Uk solange nachgeführt, bis beide Größen übereinstimmen. In diesem sogenannten Kompensationspunkt kann das gewünschte digitale Äquivalent der Meßgröße Um entweder indirekt aus der Kompensationsgröße Uk bzw. direkt aus einem der zur ihrer Bildung notwendigen digitalen Vorgrößen abgeleitet werden. Die im Beispiel der FIG 1 ebenfalls eine Spannung darstellende elektrische Kompensationsgröße Uk wird in einem Rückkopplungsnetzwerk Rk gebildet. Diesem wird an seinem Eingang die Abweichung $\triangle U$ der Meßgröße Um von der Kompensationsgröße Uk zugeführt. Diese Abweichung wird im Beispiel der FIG 1 in einem Vergleichspunkt V gebildet, an dem in die Masche am Ausgang 3, 4 der Meßbrücke MB die Kompensationsgröße Uk mit Hilfe eines Einkopplungswiderstandes RE eingespeist wird.

Erfindungsgemäß wird die Abweichung $\triangle U$ zwischen Meß- und Kompensationsgröße einem Komparator K am Eingang KE zugeführt und hiermit in ein binäres Steuersignal KA an dessen Ausgang umgewandelt. Diese Umwandlung kann beispielsweise dadurch geschehen, daß bei Vorliegen einer positiven Abweichung der Komparator K ein aktives binäres Steuersignal KA erzeugt, während bei Vorliegen einer negativen Abweichung am Eingang des Komparators das binäre Steuersignal KA die Wertigkeit Null hat.

Gemäß der Erfindung wird das binäre Steuersignal KA desweiteren einem Mikroprozessor CU an dessen binärem Eingang BE zugeführt. In Abhängigkeit des binären Steuersignales bildet der Mikroprozessor CU einen kodierten Steuerwert SW, welcher auf einer Datenbusleitung DB am Ausgang ausgegeben wird. Der kodierte Steuerwert SW wird derart gebildet, daß seine Größe abhängig vom Vorhandensein bzw. Nichtvorhandensein eines z.B. aktiven binären Steuersignales KA auf Veranlassung des Mikroprozessors mit einer vorgebbaren Geschwindigkeit erhöht bzw. erniedrigt wird. Der im Prozessor z.B. nach dem Prinzip der sogenannten sukzessiven Approximation ("Stufenverschlüsselung") gebildete kodierte Steuerwert SW wird über die Datenbusleitung DB einem Digital-Analog-Umsetzer DAU zugeführt. Dieser stellt an seinem Ausgang schließlich die dem Vergleichspunkt V zugeführte elektrische Kompensationsgröße Uk zur Verfügung.

Erfindungsgemäß wird die Größe des kodierten Steuerwertes SW am Ausgang des Mikroprozessors und somit auch die elektrische Kompensationsgröße Uk am Ausgang des Analog-Digital-Wandlers DAU mit bevorzugt einstellbarer, konstanter Geschwindigkeit erhöht bzw. erniedrigt, solange der Komparator K eine positive bzw. negative Abweichung der Kompensationsgröße von der Meßgröße detektiert. Dies hat den Vorteil, daß bei Auftreten einer derartigen Abweichung der kodierte Steuerwert und die elektrische Kompenstionsgröße bis zum erneuten Erreichen des Kompensationszustandes ständig mit einer konstanten, bevorzugt einstellbaren Geschwindigkeit nachgeführt werden.

Im Kompensationspunkt ist der kodierte Steuerwert SW ein digitales Abbild der elektrischen Meßgröße Um am Ausgang der Brückenschaltung MB. Der kodierte Steuerwert SW kann somit entweder direkt, oder in Form eines innerhalb des Mikroprozessors CU hieraus abgeleiteten, modifizierten kodierten Steuerwertes MSW beispielsweise einer digitalen Anzeigeeinheit A zugeführt werden.

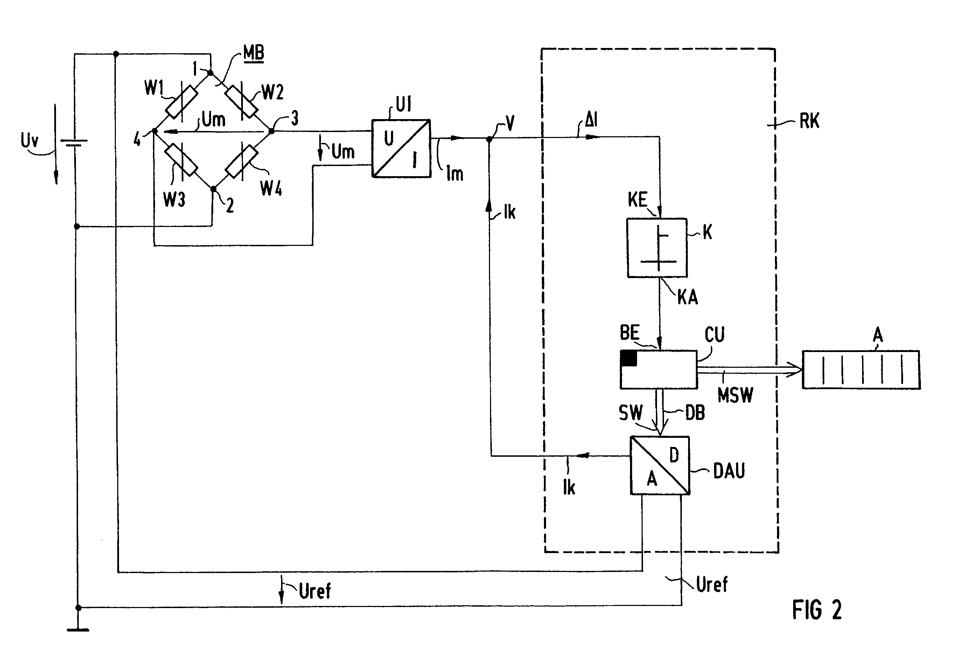

In FIG 2 ist eine weitere vorteilhafte Ausführungsform der Erfindung ebenfalls als Blockschaltbild dargestellt. Diese unterscheidet sich von der Schaltung in FIG 1 dadurch, das als elektrische Kompensationsgröße ein Strom dient. Hierzu wird dem Vergleichspunkt V sowohl die elektrische Kompensationsgröße vom Digital-Analog-Wandler DAU in Form eines Stromes Ik, als auch die elektrische Meßgröße nach Umwandlung der Brückenspannung Um mit Hilfe eines Spannungs-/Stromumsetzers UI als Strom Im zugeführt. Dementsprechend stellt die dem Komparator K am Eingang KE zugeführte Abweichung beider Größen einen Strom ΔI dar.

Bei den Schaltungen von FIG 1 und 2 wird der Digital-Analog-Wandler DAU von einer Referenzspannung Uref gespeist, welche von der Versorgungsgleichspannung Uv abgeleitet wird. Dies hat den Vorteil, daß Schwankungen der Versorgungsgleichspannung Uv die Bildung der elektrischen Kompensationsgröße Uk bzw. Ik am Ausgang des Digital-Analog-Wandlers DAU nicht beeinträchtigen können und somit keine Fehlerquelle für die gewünschte Analog-Digital-Wandlung des Meßwertes darstellen.

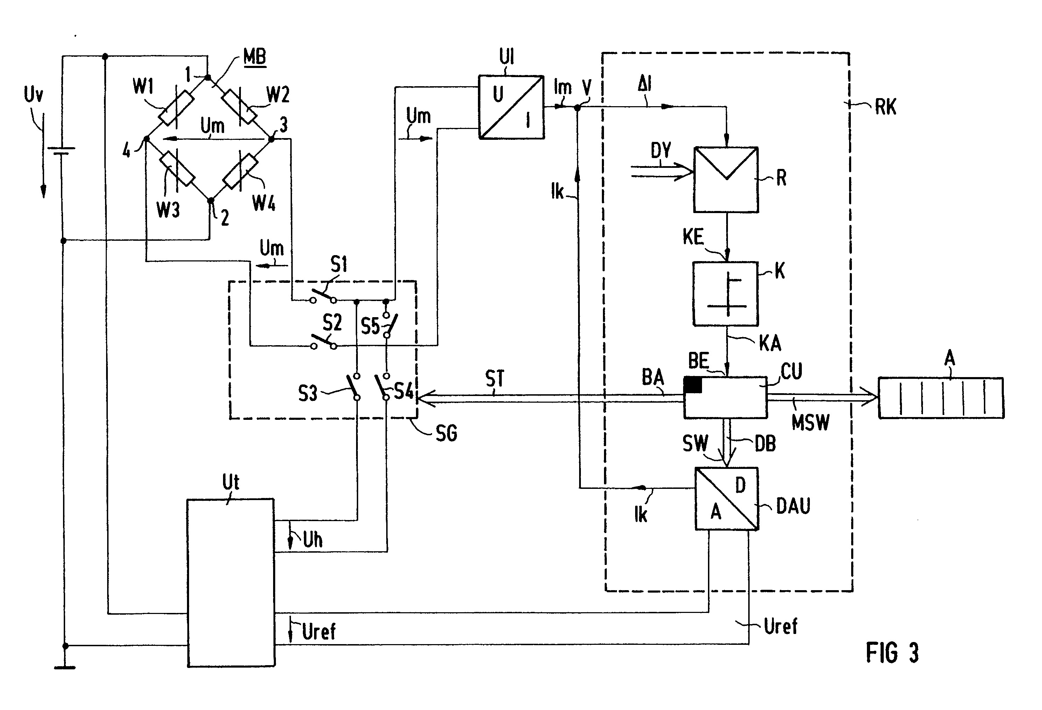

In FIG 3 ist eine weitere vorteilhafte Ausführungsform der Schaltung von FIG 2 dargestellt. Diese enthält im Rückkopplungsnetzwerk RK zwischen dem Vergleichspunkt V und dem Komparator K einen zusätzlichen Regler R, dessen Regelverhalten über eine separate Dynamikeinstellung DY individuell vorgegeben werden kann. Die Verwendung eines derartigen Reglers trägt sowohl zur Vereinfachung als auch zur Erhöhung der Genauigkeit der erfindungsgemäßen Schaltung bei. Während in den Schaltungen der Figuren 1 und 2 der Komparator K so ausgelegt sein sollte, daß dieser auch auf Änderungen der Größen Um, Uk, ΔU anspricht, die der kleinsten Wertigkeit des kodierten Steuerwertes SW entsprechen, ist es bei Verwendung der erweiterten Schaltung von FIG 3 nicht mehr notwendig, derartige Anforderungen an den Komparator K zu stellen. Vielmehr kann ein herkömmlicher Komparator eingesetzt werden, der über eine relativ große und in ihrem Wert nicht genau zu spezifizierende Schaltschwelle verfügt.

Verfügt der Regler R zumindest über einen sogenannten Proportionalanteil, so kann mit Hilfe der Dynamikeinstellung DY der dazugehörige Verstärkungsfaktor auf den jeweils vorliegenden Wert der unteren Schaltschwelle des Komparators K abgestimmt werden. Enthält der Regler gemäß einer weiteren Ausführungsform zusätzlich einen sogenannten integrierenden Anteil, so kann der Verstärkungsfaktor des proportionalen Anteiles auch kleiner als die untere Schaltschwelle des Komparators eingestellt werden, da der Reglerausgang aufgrund des integrierenden Anteiles auch bei sehr kleinen Werten der Abweichung der Kompensationsgröße von der Meßgröße den Wert der Komparatorschaltschwelle erreicht. Bevorzugt wird der Proportionalanteil des Reglers R erheblich kleiner als die untere Komparatorschwelle, aber gerade noch so groß eingestellt, um den gewünschten kleinsten aufzulösenden Wert der Abweichung im Vergleichspunkt detektieren zu können. Durch Auswahl des Proportionalanteiles wird somit die Genauigkeit der Schaltung maßgeblich beeinflußt. Besonders vorteilhaft wird der Proportionalanteil des Reglers gerade so groß gewählt, daß dieser einer von der kleinsten Wertigkeit des kodierten Steuerwertes SW hervorgerufenen Änderung der elektrischen Kompensationsgröße am Ausgang des Digital-Analog-Wandlers DAU entspricht. Der Integralanteil des Reglers wird bevorzugt so eingestellt, daß bei Auftreten einer derartigen Änderung der Kompensationsgröße die u.U. erheblich größere Schaltschwelle des Komparators in einer vorgegebenen Zeit erreicht wird.

Die in FIG 3 dargestellte Ausführungsform der Erfindung enthält desweiteren eine Schaltmittelbaugruppe SG, welche zwischen dem Ausgang 3, 4 der Brückenschaltung MB und dem Vergleichspunkt V angeordnet ist. Bei Verwendung eines Stromes als elektrische Kompensationsgröße ist die Schaltmittelbaugruppe gemäß der Darstellung von FIG 3 zwischen dem Ausgang der Brückenschaltung MB und dem Eingang des Spannungs-/Stromumsetzers UI für die elektrische Meßgröße angeordnet. Selbstverständlich kann die Baugruppe SG auch bei der Ausführungsform der Erfindung gemäß FIG 1 verwendet werden, bei der als elektrische Kompensationsgröße eine Spannung dient.

Mit Hilfe der Schaltmittelbaugruppe kann der Ausgang 3, 4 der Brückenschaltung MB zum einen vom Eingang der sich anschließenden Schaltungselemente der erfindungsgemäßen Vorrichtung abgetrennt werden. Statt der Zuführung der Brückenspannung Um kann dann mit Hilfe weiterer Schaltmittel an den Eingang dieser Schaltungselemente ein Kurzschluß bzw. eine vorgegebene Referenzspannung angelegt werden. Aufgrund der Einspeisung dieser beiden definierten Spannungswerte ist es möglich, den von Bauelemente-Streuungen und/oder Temperatur- und Langzeitdriftungen hervorgerufenen Nullpunkts-Offset-Spannungs- bzw. den Verstärkungsfehler der sich an den Ausgang der Meßbrücke MB anschließenden Schaltungselemente zu bestimmen. Bei diesen Schaltungselementen handelt es sich insbesondere um die im Rückkopplungsnetzwerk Rk enthaltenen Elemente, d.h. den Komparator K, den Mikroprozessor CU, den Digital-Analog-Wandler DAU und gegebenenfalls den Regler R. Bei Verwendung eines Stromes als Kompensationsgröße kommt zu dieser Reihenschaltung noch der Spannungs-/Stromumsetzer UI für die elektrische Meßgröße hinzu.

Gemäß der vorteilhaften Ausführungsform der FIG 3 sind in der Schaltmittelbaugruppe SG beispielhaft die beiden Schaltmittel S1, S2 zur Abtrennung des Ausganges der Meßbrücke MB enthalten. Mit Hilfe der weiteren Schaltmittel S5 bzw. S3, S4, kann an den Eingang der nachfolgenden Schaltungselemente, in FIG 3 an den Eingang des Spannungs-Stromwandlers UI ein Kurzschluß bzw. eine von einer Hilfsspannungsversorgung Ut bereitgestellte Referenzspannung Uh eingespeist werden. Bevorzugt hat die Referenzspannung Uh einen Wert, der möglichst an der Obergrenze des Wertebereiches für die elektrische Meßgröße Um liegt.

Durch Anlegen eines Kurzschlusses mit Hilfe des Schaltmittels S5 bei geöffneten Schaltmitteln S1 bis S4 kann die gesamte Nullpunkts-Offset-Spannung der Reihenschaltung aller nachfolgenden Schaltelemente bestimmt und gegebenenfalls Maßnahmen zu deren Beseitigung getroffen werden. Durch nachfolgendes Anlegen der Referenzspannung Uh bei geschlossenen Schaltmitteln S3, S4 und geöffneten Schaltmitteln S1, S2, S5 kann ein weiterer Referenzmeßpunkt bestimmt werden, mit dessen Hilfe auf den aktuellen Zustand der Schaltung und somit deren Abweichung vom Normverhalten geschlossen werden kann. Gemeinsam mit dem bei Anlegen des Kurzschlusses bestimmten Referenzmeßpunkt kann der Verstärkungsfehler der Schaltungselemente bestimmt, und somit geeignete Maßnahmen zu dessen Beseitigung getroffen werden.

Gemäß einer besonders vorteilhaften Ausführung wird die Ansteuerung der Schaltmittelbaugruppe SG vom Mikroprozessor CU koordiniert. Hierzu sind in FIG 3 Steuersignale ST vom Binärausgang BA des Mikroprozessors zur Schaltmittelbaugruppe geführt. Die Schaltmittel werden dabei vom Mikroprozessor zyklisch bei der Durchführung sogenannter Kalibrierungszyklen angesteuert. Die hierbei gewonnenen Werte der Nullpunkts-Offset-Spannung und des Verstärkungsfehlers werden im Mikroprozessor gespeichert. Es ist besonders vorteilhaff, wenn zu deren Kompensation der kodierte Steuerwert SW zum Zwecke der Anzeige und/oder Weiterleitung entsprechend korrigiert wird. Der in FIG 3 beispielhaft der digitalen Anzeigeeinheit A zugeführte modifizierte, kodierte Steuerwert MSW ist somit in seiner Meßkurve bezüglich der aktuellen Werte der Nullpunkts-Offset- und Verstärkungsfehler korrigiert.

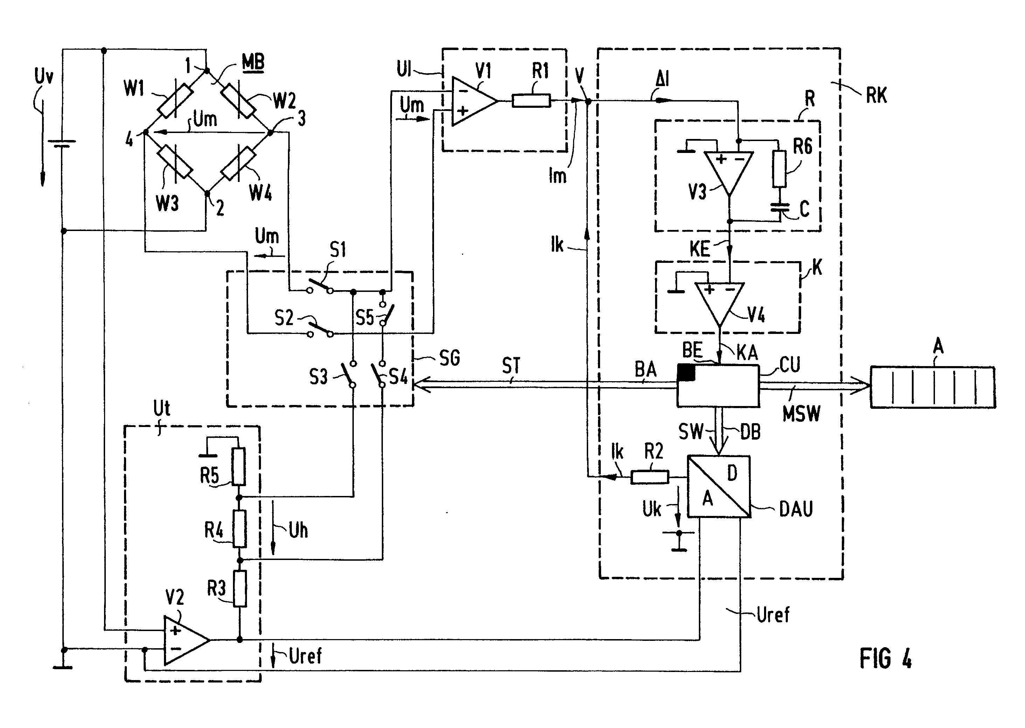

In FIG 4 ist schließlich beispielhaft eine mögliche praktische Ausführung der Schaltung von FIG 3 dargestellt. Der Spannungs-/Stromumsetzer UI für die elektrische Meßgröße Um besteht dabei vorteilhaft aus einem Differenzverstärker V1 mit nachgeschaltetem Widerstand R1. Der Regler R ist beispielhaft als PI-Regler ausgeführt und enthält einen in bekannter Weise mit einem Kondensator C und einem Widerstand R6 zum invertierenden Eingang rückgekoppelten Differenzverstärker V3. Der Proportional- bzw. Integralanteil des Reglers werden dabei durch entsprechende Auswahl der Größen des Widerstandes und des Kondensators eingestellt. Der Komparator K besteht im einfachsten Fall aus einem Differenzverstärker V4, dessen nichtinvertierender Eingang auf Masse gelegt ist. Im Beispiel der FIG 4 ist dem Ausgang des Digital-Analog-Wandlers DAU ein weiterer Widerstand R2 zur Umsetzung der Kompensationsspannung Uk in einen Kompensationsstrom Ik zur Einspeisung in den Vergleichspunkt V nachgeschaltet. Die Hilfsspannungsversorgung Ut enthält schließlich ebenfalls einen Differenzverstärker V2, dessen Ausgang über die Reihenschaltung der Widerstände R3, R4 und R5 mit dem Massepotential verbunden ist. Vom Ausgang dieses Differenzverstärkers wird zum einen die Referenzspannung Uref zum Betrieb des Digital-Analog-Wandlers DAU abgeleitet, und vom Widerstand R4 der als Spannungsteiler dienenden Widerstandskette die Hilfspannung Uh.

**Patentansprüche**

1. Vorrichtung zur Analog-Digital-Wandlung einer elektrischen Meßgröße (Um,Im), welche von Sensoren (W1,W2,W3,W4) mit veränderlichem Widerstand erzeugt wird, die in Brückenschaltung (MB) angeordnet sind, mit
   a) einem Komparator (K), welcher bei Auftreten einer Abweichung ($\Delta U$, $\Delta I$) einer elektrischen Kompensationsgröße (Uk,Ik) von der Meßgröße (Um,Im) ein binäres Steuersignal (KA) bildet,
   b) einem Mikroprozessor (CU), welcher bei Vorhandensein bzw. Nichtvorhandensein des binären Steuersignales (KA) einen kodierten Steuerwert (SW) verändert, insbesondere erhöht bzw. erniedrigt, und
   c) einem Digital-Analog-Wandler (DAU), welcher entsprechend dem kodierten Steuerwert (SW) die Kompensationsgröße (Uk,Ik) nachführt.

2. Vorrichtung nach Anspruch 1, **dadurch gekennzeichnet,** daß als elektrische Kompensationsgröße ein Strom (Ik) dient.

3. Vorrichtung nach Anspruch 1 oder 2, **dadurch gekennzeichnet,** daß dem Komparator (K) ein Regler (R) mit einstellbarer Dynamik (DY) vorgeschaltet ist, dem die Abweichung ($\Delta U, \Delta I$)

der elektrischen Kompensationsgröße (Uk, Ik) von der Meßgröße (Um,Im) als Eingangssignal zugeführt wird.

4. Vorrichtung nach Anspruch 3, **dadurch gekennzeichnet,** daß der Regler (R) ein PI-Regler ist.

5. Vorrichtung nach einem der vorangegangenen Ansprüche, **gekennzeichnet** durch eine Schaltmittelbaugruppe (SG;S1,S2,S3,S4,S5), womit der Ausgang (3,4) der Brückenschaltung (MB) von der Kette der sich anschließenden Schaltungselemente (UI,R,K,CU, DAU) abgetrennt, und statt dessen an deren Eingang ein Kurzschluß bzw. eine vorgegebene Referenzspannung (Uh) zur Bestimmung der Nullpunkts-Offset-Spannung bzw. des Verstärkungsfehlers der Schaltungselemente angelegt werden kann.

6. Vorrichtung nach Anspruch 5, **dadurch gekennzeichnet,** daß die Schaltmittelbaugruppe (SG;S1,S2,S3, S4,S5) vom Mikroprozessor (CU) zyklisch zur Durchführung von Kalibrierungszyklen angesteuert (BA,ST) wird, die jeweilige Nullpunkts-Offset-Spannung und der Verstärkungsfehler gespeichert werden, und zu deren Kompensation der kodierte Steuerwert (SW) zum Zwecke der Anzeige (A) und/oder Meßwertausgabe der digital umgesetzten Meßgröße (Um,Im) entsprechend abgeglichen (MSW) wird.

FIG 1

FIG 2

FIG 3

FIG 4

EP 0 456 168 A2